# EUROPÄISCHE PATENTANMELDUNG

(11) **EP 1 541 344 A1**
(43) Veröffentlichungstag der Anmeldung: **15.06.2005**
(21) Anmeldenummer: 04405745.3
(22) Anmeldetag: 01.12.2004
(51) Int. Cl.: B32B 27/32, B32B 27/08

(54) **Mehrschichtiges Laminat mit beidseitig angeordneten Polyethylenfilmen**

(30) Priorität: 05.12.2003 EP 03405872
(71) Anmelder: Alcan Technology & Management Ltd., 8212 Neuhausen am Rheinfall (CH)
(72) Erfinder: Hummel, Otto, 78224 Singen (DE); Senger, Karl-Heinz, 78239 Rielasingen (DE)

(57) **Zusammenfassung**

Ein für Tubenrümpfe geeignetes Laminat weist eine Gesamtdicke von 150 bis 250 µm mit beidseitig aus einer Polyethylenschicht bestehenden Laminatoberflächen auf, wobei die Polyethylenschicht auf wenigstens eine Seite des Laminates (10, 110, 210, 310) Teil eines beidseitig mit Polyethylen beschichteten, aus einer Mischung von Polyethylen und Polypropylen bestehenden Compoundfilms (12) ist. Der Compoundfilm führt zu einer Erhöhung der Laminatsteifigkeit, so dass zur Erzielung vorgegebener Steifigkeitsanforderungen ein kostengünstigeres Laminat mit geringerer Laminatdicke eingesetzt werden kann.

## Beschreibung

Die Erfindung betrifft die Verwendung eines Laminates für Tubenrümpfe.

Zur Herstellung von Tuben werden heute unter anderem mehrschichtige Kunststofflaminate verwendet. Tuben mit einer so genannten Barriereschicht weisen zusätzlich eine im Innern der Laminate angeordnete Sperrschicht gegen den Durchtritt von Wasserdampf und Gasen, z.B. eine Aluminiumfolie, auf. Die Deckschichten, welche die Laminatoberflächen bilden, bestehen dabei aus Polyethylen, da bei der Herstellung des Tubenrumpfes aus Laminaten, die durch Extrusionskaschierung oder im Cast-Verfahren gefertigt werden, die Innenseite gegen die Aussenseite gesiegelt wird.

Tubenlaminate sind verhältnismässig teure Materialien. Es besteht daher der Wunsch nach einer kostengünstigeren Lösung.

Der Erfindung liegt die Aufgabe zugrunde, ein zur Herstellung von Tuben geeignetes Laminat mit einem verringerten Kunststoffanteil zu schaffen, ohne dass die Reduktion der Laminatdicke zu einer unerwünschten Erniedrigung der Steifigkeit führt.

Zur erfindungsgemässen Lösung der Aufgabe führt ein Laminat einer Gesamtdicke von 150 bis 250 µm mit beidseitig aus einer Polyethylenschicht bestehenden Laminatoberflächen, wobei die Polyethylenschicht auf wenigstens einer Seite des Laminates Teil eines beidseitig mit Polyethylen beschichteten, aus einer Mischung von Polyethylen und Polypropylen bestehenden Compoundfilms ist.

Der Compoundfilm verleiht dem Laminat eine höhere Steifigkeit, so dass die mit einem Laminat mit reinen Polyethylen-Schichten erzielbare Steifigkeit schon bei geringerer Laminatdicke erreicht wird. Der durch die reduzierte Dicke erniedrigte Materialbedarf führt letztlich zu einem kostengünstigeren Laminat.

Der Compoundfilm enthält vorzugsweise mehr als 50 Gew.-% Polypropylen.

Die auf beiden Seiten des Compoundfilms angeordneten Polyethylenschichten weisen bevorzugt eine Dicke von 10 bis 30 µm auf. Die bevorzugte Dicke des Compoundfilms liegt bei 20 bis 80 µm.

Bei einer besonders bevorzugten Ausführungsform des erfindungsgemäss verwendeten Laminates sind die die Laminatoberflächen bildenden Polyethylenschichten auf beiden Seiten des Laminates Teil eines beidseitig mit Polyethylen beschichteten, aus einer Mischung von Polyethylen und Polypropylen bestehenden Compoundfilms.

Eine der Laminatoberflächen kann beispielsweise auch ein LMDPE-, LLDPEoder LDPE-Film oder ein Film aus geschäumtem Polyethylen sein.

Mit dem geschäumten Film aus Polyethylen kann zusätzliches Gewicht eingespart und eine weiter verbesserte Steifigkeit des Laminates erreicht werden. Zudem zeigt der geschäumte Film ein besseres Gleitverhalten u. a. gegen Stahl, wodurch die Tubenproduktion sicherer gemacht werden kann.

Zwischen den beiden die Laminatoberflächen bildenden Polyethylenschichten kann im Bedarfsfall eine Barriereschicht gegen den Durchtritt von Wasserdampf und Gasen angeordnet sein.

Die Sperrschicht gegen Gase, Dämpfe und Feuchtigkeit, die sog. Barriereschicht, kann eine Metallfolie aus beispielsweise Aluminium sein. Andere geeignete Materialien für Sperrschichten sind beispielsweise Filme aus Kunststoffen, wie Polyvinylidenchlorid (PVDC), Ethylvinylalkohol (EVOH), Polyamid (PA) oder Polyamid-Blends, im Dickenbereich zwischen etwa 3 und 25 µm, oder eine Schicht aus keramischen Materialien, wie beispielsweise aus Silizium- oder Aluminiumoxid bzw. -nitrid, die als dünne Schicht im Bereich von etwa 10 - 500 nm im Vakuum abgeschieden werden. Beispiele weiterer Sperrschichten sind metallische Schichten, z.B. aus Aluminium, die beispielsweise durch Sputtern oder durch Abscheidung aus dem Vakuum in einer Dicke von etwa 10 nm bis etwa 2 µm abgeschieden werden.

Im vorliegenden Fall ist insbesondere eine Aluminiumfolie geeignet, dem Laminat neben den Barriereeigenschaften, welche den Durchtritt von Flüssigkeiten, Gasen, Dämpfen, Wasserdampf, Aromen oder Geruchsstoffen verhindern, zusätzliche mechanische Stabilität zu verleihen.

Zwischen dem beidseitig mit Polyethylen beschichteten Compoundfilm und der Aluminiumfolie ist bevorzugt eine Zwischenschicht aus coextrudiertem PolyethylenNinylacetat (VA) angeordnet.

Zwischen der Aluminiumfolie und einer der beiden die Laminatoberflächen bildenden Polyethylenschichten kann auch eine Zwischenschicht aus einem Ethylencopolymer, insbesondere einem Ethylen-Acrylsäure (E.AA)-Copolymer angeordnet sein.

Die bevorzugte Dicke der Aluminiumfolie liegt bei 5 bis 15 µm.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
- - Fig. 1: den Aufbau einer ersten Ausführungsform eines Tubenlaminates;
- - Fig. 2: den Aufbau einer zweiten Ausführungsform eines Tubenlaminates;
- - Fig. 3: den Aufbau einer dritten Ausführungsform eines Tubenlaminates;
- - Fig. 4: den Aufbau einer vierten Ausführungsform eines Tubenlaminates.

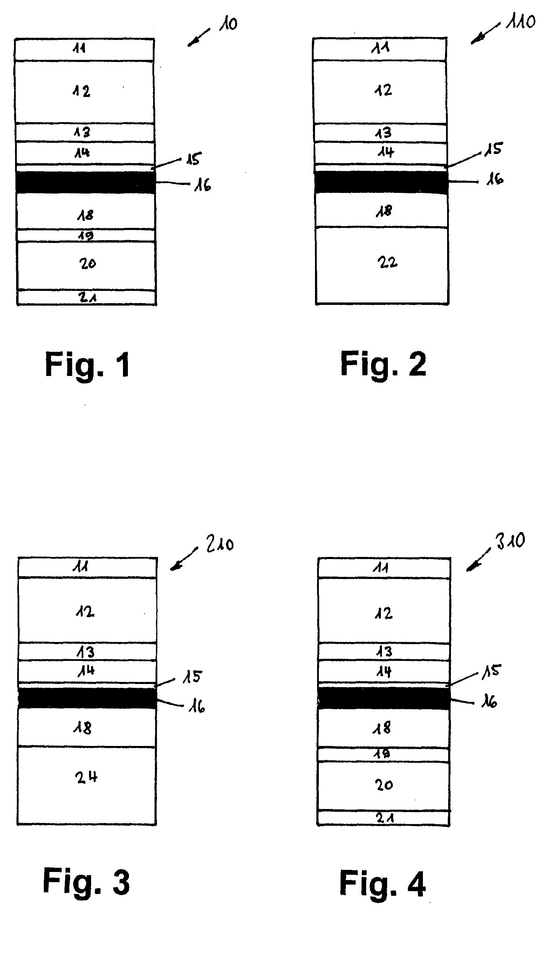

Fig. 1 zeigt den Aufbau eines ersten, eine Gesamtdicke von 175 µm aufweisenden Tubenlaminates 10, das von der Tubenaussenseite zur Tubeninnenseite hin den folgenden Aufbau aufweist:
- 11: PE-Film, 25 µm
- 12: PP/PE-Compoundfilm, weiss, 40 µm
- 13: PE-Film, 25 µm
- 14, 15: coextrudierter PEV/A-Film, weiss, 17 µm
- 16: Aluminiumfolie, 6,3 µm
- 18: E.AA-Copolymerfilm, 17 µm
- 19: PE-Film, 15 µm
- 20: PE/PP-Compoundfilm, 15 µm
- 21: PE-Film, 15 µm

Der PP/PE-Compoundfilm 12 mit den beidseitigen PE-Schichten 11, 13 und der PP/PE-Compoundfilm 20 mit den beidseitigen PE-Schichten 19, 21 werden beispielsweise coextrudiert und über den ebenfalls coextrudierten PEV/A-Film 14, 15 bzw. über den E.AA-Copolymerfilm 18 mit der Aluminiumfolie 16 laminiert.

Fig. 2 zeigt den Aufbau eines Tubenlaminates 110 entsprechend dem Tubenlaminat 10 von Fig. 1, wobei jedoch anstelle des PP/PE-Compoundfilms 20 mit den beidseitigen PE-Schichten 19, 21 ein geschäumter PE-Film 22 die Tubeninnenseite bildet. Das Tubenlaminat 110 mit einer Gesamtdicke von 200 µm weist von der Tubenaussenseite zur Tubeninnenseite hin den folgenden Aufbau auf:
- 11: PE-Film, 25 µm
- 12: PP/PE-Compoundfilm, weiss, 40 µm
- 13: PE-Film, 25 µm
- 14, 15: coextrudierter PEV/A-Film, weiss, 24 µm
- 16: Aluminiumfolie, 6,3 µm
- 18: E.AA-Copolymerfilm, 24 µm
- 22: PE-Film, geschäumt, 60 µm

Fig. 3 zeigt den Aufbau eines Tubenlaminates 210 entsprechend dem Tubenlaminat 110 von Fig. 1, wobei jedoch anstelle des PP/PE-Compoundfilms 20 mit den beidseitigen PE-Schichten 19, 21 ein LMDPE-Film 24 die Tubeninnenseite bildet. Das Tubenlaminat 210 mit einer Gesamtdicke von 200 µm weist von der Tubenaussenseite zur Tubeninnenseite hin den folgenden Aufbau auf:
- 11: PE-Film, 25 µm
- 12: PP/PE-Compoundfilm, weiss, 40 µm
- 13: PE-Film, 25 µm
- 14,15: coextrudierter PEV/A-Film, weiss, 20 µm
- 16: Aluminiumfolie, 12 µm
- 18: E.AA-Copolymerfilm, 20 µm
- 24: LMDPE-Film, 60 µm

Fig. 4 zeigt den Aufbau eines Tubenlaminates 310 entsprechend dem Tubenlaminat 110 von Fig. 1. Das Tubenlaminat 310 mit einer Gesamtdicke von 200 µm weist von der Tubenaussenseite zur Tubeninnenseite hin den folgenden Aufbau auf:
- 11: PE-Film, 25 µm
- 12: PP/PE-Compoundfilm, weiss, 40 µm
- 13: PE-Film, 25 µm
- 14, 15: coextrudierter PEV/A-Film, weiss, 27 µm
- 16: Aluminiumfolie, 12 µm
- 18: E.AA-Copolymerfilm, 27 µm
- 19: PE-Film, 15 µm
- 20: PE/PP-Compoundfilm, 15 µm
- 21: PE-Film, 15 µm

### Beispiel

Anhand mathematischer Modellrechnungen wurden für die drei in der Tabelle angeführten Ausführungen von Tubenlaminaten A, B, und C die Biegesteifigkeit errechnet. Die Ausführungen B und C sind erfindungsgemäss aufgebaute Laminate, Ausführung A ist ein Vergleichsbeispiel. Alle drei Laminate weisen die gleiche Gesamtdicke von 200 µm auf und unterscheiden sich nur im Aufbau der die spätere Aussenseite einer Tube bildenden Schicht des Laminates.

**Tabelle**

| Ausführung A | Ausführung B | Ausführung C |
|---|---|---|
| LDPE-Film (100 µm) | coextrudierter Film mit PE (20µm) / 30% PE + 70% PP Compound (60 µm) IPE (20µm) | |
| coextrudierter PEV/A-Film (21 µm) | coextrudierter PEV/A-Film (21 µm) | coextrudierter PEV/A-Film (24 µm) |
| Aluminiumfolie (12 µm) | Aluminiumfolie (12 µm) | Aluminiumfolie (6,3 µm) |
| E.AA Copolymerfilm (22 µm) | E.AA Copolymerfilm (22 µm) | E.AA Copolymerfilm (25 µm) |
| LMDPE Film (45 µm) | LMDPE Film (45 µm) | LMDPE Film (45 µm) |
| Biegesteifigkeit: 0,21 Nmm | Biegesteifigkeit: 0,43 Nmm | Biegesteifigkeit: 0,42 Nmm |

Die Berechnungen zeigen deutlich den Unterschied in der Biegesteifigkeit bei einer stofflichen Veränderung. Ein Laminat mit einem beidseitig mit PE beschichteten PE/PP-Compoundfilm gemäss den Ausführungen B und C führt zu einer Verdoppelung der Biegesteifigkeit gegenüber einem Laminat gemäss der Ausführung A mit gleichem Aufbau mit Ausnahme eines LDPE-Films anstelle des beidseitig mit PE beschichteten PE/PP-Compoundfilms.

Die durch den beidseitig mit PE beschichteten PE/PP-Compoundfilm bedingte höhere Steifigkeit und stärkere Rückstellkraft des Laminates machen einen aus dem Laminat gefertigten Tubenrumpf beulfester. Diese Eigenschaft wirkt verkaufsfördernd, wenn Tuben ohne Umverpackung angeboten werden. Die Dicke der Aluminiumfolie beeinflusst die Biegesteifigkeit der Laminate bei der hier gewählten Schichtdickenverteilung nur geringfügig und kann deshalb unter Beibehaltung der Barrierewirkung ohne Steifigkeitsverlust des Laminates reduziert werden.

## Patentansprüche

1. Verwendung eines Laminates einer Gesamtdicke von 150 bis 250 µm mit beidseitig aus einer Polyethylenschicht bestehenden Laminatoberflächen, wobei die Polyethylenschicht auf wenigstens einer Seite des Laminates (10, 110, 210, 310) Teil eines beidseitig mit Polyethylen beschichteten, aus einer Mischung von Polyethylen und Polypropylen bestehenden Compoundfilms (12) ist, für Tubenrümpfe.

2. Verwendung nach Anspruch 1, **dadurch gekennzeichnet, dass** der Compoundfilm (12) mehr als 50 Gew.-% Polypropylen enthält.

3. Verwendung nach Anspruch 1 oder 2, **dadurch gekennzeichnet, dass** die auf beiden Seiten des Compoundfilms (12) angeordneten Polyethylenschichten (11, 13) eine Dicke von 10 bis 30 µm aufweisen.

4. Verwendung nach einem der Ansprüche 1 bis 3, **dadurch gekennzeichnet, dass** der Compoundfilm (12) eine Dicke von 20 bis 80 µm aufweist.

5. Verwendung nach einem der Ansprüche 1 bis 4, **dadurch gekennzeichnet, dass** die die Laminatoberflächen bildenden Polyethylenschichten auf beiden Seiten des Laminates (310) Teil eines beidseitig mit Polyethylen beschichteten, aus einer Mischung von Polyethylen und Polypropylen bestehenden Compoundfilms (12) sind.

6. Verwendung nach einem der Ansprüche 1 bis 4, **dadurch gekennzeichnet, dass** eine der Laminatoberflächen von einem LMDPE-, LLDPE- oder LDPE-Film oder einem Film aus geschäumtem Polyethylen gebildet ist.

7. Verwendung nach einem der Ansprüche 1 bis 6, **dadurch gekennzeichnet, dass** zwischen den beiden die Laminatoberflächen bildenden Polyethylenschichten eine Barriereschicht gegen den Durchtritt von Wasserdampf und Gasen angeordnet ist.

8. Verwendung nach Anspruch 7, **dadurch gekennzeichnet, dass** als Barriereschicht eine Metallfolie, insbesondere eine Aluminiumfolie (16), ein Kunststofffilm aus Polyvinylidenchlorid (PVDC), Ethylvinylalkohol (EVOH), Polyamid (PA) oder Polyamid-Blends, eine Schicht aus keramischen Materialien, insbesondere aus Silizium- oder Aluminiumoxid bzw. -nitrid, die als dünne Schicht aus dem Vakuum abgeschieden wird, oder eine metallische Schicht, insbesondere aus Aluminium, die durch Sputtern oder aus dem Vakuum abgeschieden wird, verwendet wird.

9. Verwendung nach Anspruch 8, **dadurch gekennzeichnet, dass** zwischen dem beidseitig mit Polyethylen beschichteten Compoundfilm (12) und der Aluminiumfolie (16) eine Zwischenschicht aus einem coextrudierten PolyethylenNinylacetat-Laminat angeordnet ist.

10. Verwendung nach Anspruch 8, **dadurch gekennzeichnet, dass** zwischen der Aluminiumfolie (16) und einer der beiden die Laminatoberflächen bildenden Polyethylenschichten eine Zwischenschicht aus einem Polyethylen-Copolymer, insbesondere einem Ethylen/Acrylsäure-Copolymer, angeordnet ist.

11. Verwendung nach einem der Ansprüche 8 bis 10, **dadurch gekennzeichnet, dass** die Aluminiumfolie (16) eine Dicke von 5 bis 15 µm aufweist.
